# EUROPÄISCHE PATENTANMELDUNG

(11) **EP 3 260 261 A1**
(43) Veröffentlichungstag der Anmeldung: **27.12.2017**
(21) Anmeldenummer: 16001414.8
(22) Anmeldetag: 23.06.2016
(51) Int. Cl.: B29B 13/06, B29C 44/34

(54) **HYBRIDE VORRICHTUNG ZUM TROCKNEN UND IMPRÄGNIEREN VON POLYMEREN GRANULAT ZUR FERTIGUNG VON GESCHÄUMTEN KUNSTSTOFFTEILEN**

(71) Anmelder: Linde Aktiengesellschaft, 80331 München (DE); Kunststoff-Institut Lüdenscheid, 58507 Lüdenscheid (DE)
(72) Erfinder: Heninger, Rolf, 85635 Höhenkirchen-Siegertsbrunn (DE); Praller, Andreas, 82110 Germering (DE); Kürten, Andreas, 58644 Iserlohn (DE); Maschotta, Fabian, 58097 Hagen (DE); Szych, Pawel, 81241 München (DE)
(74) Vertreter: Gellner, Bernd

(57) **Zusammenfassung**

Die vorliegende Erfindung betrifft eine Einrichtung zum Trocken und Imprägnieren eines Werkstoffes mit einem fluiden Treibmittel, aufweisend: eine Treibmittelquelle zum Bereitstellen eines fluiden Treibmittels, einen ersten Behälter, der zum Trocknen eines Werkstoffes mit dem fluiden Treibmittel oder einem Trocknungsgas und zur Beladung des getrockneten Werkstoffes mit dem fluiden Treibmittel bei einem Druck von mindestens 2 bar ausgebildet ist, wobei der erste Behälter in Strömungsverbindung mit der Treibmittelquelle oder mit der Treibmittelquelle und einer Trocknungsgasquelle zur Bereitstellung des Trocknungsgases bringbar ist, und einen Trockner zum Abtrennen von Wasser aus dem fluiden Treibmittel oder dem Trocknungsgas, wobei der Trockner in Strömungsverbindung mit dem ersten Behälter bringbar ist.

## Beschreibung

Die Erfindung betrifft eine Einrichtung zum Trocknen und Imprägnieren eines Werkstoffes mit einem fluiden Treibmittel.

Kunststoffe, insbesondere Kunststoffgranulate, können unter bestimmten Bedingungen Kohlendioxid aufnehmen und speichern. Zu diesen Bedingungen zählen Parameter wie etwa Druck und Dauer der Beaufschlagung mit Kohlendioxid sowie Art des Kunststoffes.

Solcherart mit einem Treibmittel wie Kohlendioxid beaufschlagte oder imprägnierte Werkstoffe können vorteilhafterweise zur Herstellung von Werkstücken mit Zellstruktur verwendet werden, beispielsweise in einem Spritzguss- oder Extrusionsverfahren.

Für die Bereitstellung eines mit einem Treibmittel imprägnierten Werkstoffes zur Verwendung bei der Herstellung eines Werkstückes oder Bauteils mit Zellstruktur durch Spritzguss oder Extrusion, ist in der Regel erforderlich, den Werkstoff vor der Imprägnierung zu trocknen. Diese ist insbesondere von Nöten, wenn es sich bei dem zu imprägnierenden Werkstoff um ein hygroskopisches Polymer handelt.

Im Stand der Technik wird eine Reihe von verschiedenen Vorrichtungen für diesen Zweck vorgeschlagen, wie beispielsweise Trockenlufttrockner, Trommeltrockner, Niederdruck- oder Vakuumtrockner, Drucklufttrockner oder Heißlufttrockner. Diese müssen jedoch vergleichsweise aufwändig in bereits bestehende Anlage integriert werden.

Es wäre daher wünschenswert, einfache und wirtschaftlich sinnvolle Einrichtungen zur Verfügung zu stellen, die sowohl den Werkstoff trocknen als mit einem Treibmittel beladen können.

Hiervon ausgehend liegt der vorliegenden Erfindung die Aufgabe zugrunde, eine Einrichtung zur einfachen und wirtschaftlich sinnvollen Bereitstellung von mit einem Treibmittel imprägnierten Werkstoffen zur Verfügung zu stellen, die die Herstellung von Bauteilen mit Zellstruktur erlaubt.

Diese Aufgabe wird durch eine Einrichtung mit den Merkmalen der Ansprüche 1 und 2 gelöst. Bevorzugte Ausführungsformen sind in den zugehörigen Unteransprüchen angegeben und werden nachfolgend beschrieben.

Gemäß Anspruch 1 wird eine Errichtung zum Trocknen und Imprägnieren eines Werkstoffes mit einem fluiden Treibmittel zur Verfügung gestellt.

Danach weist die erfindungsgemäße Einrichtung auf:
- eine Treibmittelquelle zum Bereitstellen eines fluiden Treibmittels,
- einen ersten Behälter, der zum Trocknen eines Werkstoffes mit dem fluiden Treibmittel oder einem Trocknungsgas und zur Beladung bzw. Imprägnieren des getrockneten Werkstoffes mit dem fluiden Treibmittel bei einem Druck von mindestens 2 bar ausgebildet ist, wobei der erste Behälter in Strömungsverbindung mit der Treibmittelquelle oder mit der Treibmittelquelle und einer Trocknungsgasquelle zum Bereitstellen eines Trocknungsgas bringbar ist, und
- einen Trockner zum Abtrennen von Wasser aus dem fluiden Treibmittel oder dem Trocknungsgas, wobei der Trockner in Strömungsverbindung mit dem ersten Behälter bringbar ist.

Vorteilhafterweise kann in einer solchen Einrichtung der Werkstoff sequentiell im ersten Behälter zunächst getrocknet werden und anschließend mit dem fluiden Treibmittel beladen bzw. imprägniert werden. Hierfür ist insbesondere vorgesehen, dass der erste Behälter zunächst mit dem Werkstoff befüllt wird, anschließend das fluide Treibmittel oder das Trocknungsgas als Trocknungsmittel durch den ersten Behälter geführt wird, und dann das fluide Treibmittel in den ersten Behälter geführt wird, um den nun mehr getrockneten Werkstoff mit dem fluiden Treibmittel zu beladen bzw. zu imprägnieren.

Gemäß einer Ausführungsform der erfindungsgemäßen Einrichtung ist vorgesehen, dass der erste Behälter zur Beladung des getrockneten Werkstoffes mit dem fluiden Treibmittel bei einem Druck im Bereich von 2 bar bis 100 bar, vorzugsweise bei einem Druck im Bereich von 20 bar bis 50 bar, ausgebildet ist.

Gemäß einer Ausführungsform der erfindungsgemäßen Einrichtung weist der erste Behälter einen ersten Einlass auf sowie ein erstes Einlassventil zum Absperren bzw. Öffnen des ersten Einlasses auf. Der erste Einlass ist zum Einleiten des Werkstoffs (z.B. in Granulatform) in den ersten Behälter konfiguriert.

Weiterhin weist der erste Behälter gemäß einer Ausführungsform der erfindungsgemäßen Einrichtung einen zweiten Einlass auf sowie ein zweites Einlassventil zum Absperren bzw. Öffnen des zweiten Einlasses. Hierbei ist der zweite Einlass zum Einleiten des fluiden Treibmittels oder des Trocknungsgases in den ersten Behälter konfiguriert und kann daher in Strömungsverbindung mit der Treibmittelquelle oder der Trocknungsgasquelle gebracht werden, so dass insbesondere im ersten Behälter ein vordefinierter Druck einstellbar ist.

Weiterhin weist der erste Behälter einen ersten Auslass auf sowie ein erstes Auslassventil zum Absperren bzw. Öffnen des ersten Auslasses. Der erste Auslass ist zum Ablassen von Werkstoff (z.B. in Granulatform) aus dem ersten Behälter konfiguriert, wobei der erste Auslass neben dem ersten Auslassventil eine Dosiereinheit (z.B. in Form einer Zellradschleuse) aufweisen kann.

Weiterhin weist der erste Behälter gemäß einer Ausführungsform der erfindungsgemäßen Einrichtung einen zweiten Auslass auf sowie ein zweites Auslassventil zum Absperren bzw. Öffnen des zweiten Auslasses, wobei der zweite Auslass zum Ablassen von Treibmittel aus dem ersten Behälter konfiguriert ist, z.B. um den Druck im ersten Behälter abzusenken.

Gemäß einer Ausführungsform der erfindungsgemäßen Einrichtung weist der erste Behälter einen dritten Einlass auf sowie ein drittes Einlassventil zum Absperren bzw. Öffnen des dritten Einlasses. Der dritte Einlass ist zum Einleiten des Trocknungsgases in den ersten Behälter konfiguriert, wenn der zweite Einlass zur Einleitung des Treibmittels in den ersten Behälter vorgesehen ist. Der dritte Einlass kann auch zum Einleiten des Treibmittels in den ersten Behälter konfiguriert, wenn der zweite Einlass zur Einleitung des Trocknungsgases in den ersten Behälter vorgesehen ist.

Gemäß einer Alternative zum Gegenstand des Anspruchs 1 wird eine Einrichtung zum Trocknen und Imprägnieren eines Werkstoffes mit einem fluiden Treibmittel mit den Merkmalen des Anspruchs 2 zur Verfügung gestellt.

Danach weist die alternative erfindungsgemäße Einreichung auf:
- eine Treibmittelquelle zum Bereitstellen eines fluiden Treibmittels,
- einen ersten Behälter, der zum Trocknen eines Werkstoffes mit dem fluiden Treibmittel oder einem Trocknungsgas ausgebildet ist, wobei der erste Behälter in Strömungsverbindung mit der Treibmittelquelle oder einer Trocknungsgasquelle bringbar ist,
- einen zweiten Behälter, der zur Beladung bzw. Imprägnieren des getrockneten Werkstoffes mit dem fluiden Treibmittel bei einem Druck von mindestens 2 bar ausgebildet ist, wobei der zweite Behälter mit der Treibmittelquelle in Strömungsverbindung bringbar ist, und
- einen Trockner zum Abtrennen von Wasser aus dem fluiden Treibmittel oder dem Trocknungsgas, wobei der Trockner in Strömungsverbindung mit dem ersten Behälter bringbar ist.

Unter einem Trockner ist im Sinne der Erfindung jede Vorrichtung zu verstehen, in welcher Wasser von einem Gas oder Fluid abgetrennt werden kann.

Unter einem fluiden Treibmittel wird im Rahmen der vorliegenden Erfindung ein gasförmiges und/oder flüssiges Treibmittel ausgenommen Wasser verstanden. Bei dem Treibmittel handelt es sich bevorzugt um z.B. Kohlendioxid (CO₂) oder ein Inertgas wie Stickstoff (N₂) oder ein Edelgas, beispielsweise Helium oder Argon. Das Treibmittel kann weitere Stoffe aufweisen.

Insbesondere ist das fluide Treibmittel wasserfrei, d.h. insbesondere durch einen Wassergehalt von nicht mehr als 1 %(v/v), 0,5 % (v/v), oder 0,1 % (v/v) der Sättigungskonzentration des Wasser im jeweiligen Treibmittel, wenn das Treibmittel auch zum Trocknen des Werkstoffes vorgesehen ist.

Insbesondere ist die Einrichtung gemäß einer bevorzugten Ausführungsform der erfindungsgemäßen Einrichtung nach Anspruch 1 oder 2 dazu ausgebildet, den zu trocknenden Werkstoffes mit dem fluiden Treibmittel zu trocken, wobei das fluide Treibmittel vorzugsweise derart in oder durch den ersten Behälter geleitet werden kann, dass ein darin befindlicher Werkstoff von dem fluiden Treibmittel umspült werden kann, und dabei Wasser, welches sich am oder im Werkstoff befindet, vom fluiden Treibmittel aufgenommen werden kann. Zur Regeneration des fluiden Treibmittels ist die erfindungsgemäße Vorrichtung insbesondere weiterhin dazu ausgebildet, das mit Wasser beladene fluide Treibmittel in den Trockner führen zu können, und dass getrocknete fluide Treibmittel zurück in den ersten Behälter.

Gemäß einer alternativen Ausführungsform der erfindungsgemäßen Einrichtung mit den Merkmalen des Anspruchs 1 oder 2, ist die Einrichtung dazu ausgebildet, den zu trocknenden Werkstoffes mit einem Trocknungsgas, wie beispielsweise Druckluft oder einem sich vom fluiden Treibmittel unterscheidenden Inertgas, wie etwa Stickstoff oder Argon, zu trocken, wobei das Trocknungsgas vorzugsweise derart in oder durch den ersten Behälter geleitet werden kann, dass ein darin befindlicher Werkstoff von dem Trocknungsgas umspült werden kann, und dabei Wasser, welches sich am oder im Werkstoff befindet, vom Trocknungsgas aufgenommen werden kann. Zur Regeneration des Trocknungsgases ist die erfindungsgemäße Vorrichtung insbesondere weiterhin dazu ausgebildet, das mit Wasser beladene Trocknungsgas in den Trockner führen zu können, und dass getrocknete Trocknungsgas zurück in den ersten Behälter.

Gemäß einer weiteren Ausführungsform der erfindungsgemäßen Einrichtung nach Anspruch 2 ist vorgesehen, dass der erste Behälter einen ersten Einlass auf sowie ein erstes Einlassventil zum Absperren bzw. Öffnen des ersten Einlasses aufweist. Der erste Einlass ist zum Einleiten von Werkstoff (z.B. in Granulatform) in den ersten Behälter konfiguriert.

Gemäß einer weiteren Ausführungsform der erfindungsgemäßen Einrichtung nach Anspruch 2 ist vorgesehen, dass der erste Behälter einen zweiten Einlass auf sowie ein zweites Einlassventil zum Absperren bzw. Öffnen des ersten Einlasses aufweist. Der zweite Einlass ist zum Einleiten des Treibmittels oder des Trocknungsgases in den ersten Behälter konfiguriert und kann daher in Strömungsverbindung mit der Treibmittelquelle oder der Trocknungsgasquelle gebracht werden, so dass insbesondere im ersten Behälter ein vordefinierter Druck einstellbar ist.

Gemäß einer weiteren Ausführungsform der erfindungsgemäßen Einrichtung nach Anspruch 2 ist vorgesehen, dass der zweite Behälter einen ersten Einlass auf sowie ein erstes Einlassventil zum Absperren bzw. Öffnen des ersten Einlasses aufweist. Hierbei ist der erste Einlass zum Einleiten des fluiden Treibmittels in den zweiten Behälter konfiguriert und kann daher in Strömungsverbindung mit der Treibmittelquelle gebracht werden, so dass insbesondere im zweiten Behälter ein vordefinierter Druck einstellbar ist.

Gemäß einer weiteren Ausführungsform der erfindungsgemäßen Einrichtung nach Anspruch 2 ist vorgesehen, dass der zweite Behälter einen ersten Auslass auf sowie ein erstes Auslassventil zum Absperren bzw. Öffnen des ersten Auslasses aufweist. Hierbei ist der erste Auslass zum Ablassen des imprägnierten Werkstoffes konfiguriert. Vorzugsweise weist der erste Auslass zusätzlich eine Dosiereinheit, wie etwa eine Zellradschleuse auf.

Gemäß einer weiteren Ausführungsform der erfindungsgemäßen Einrichtung nach Anspruch 2 ist vorgesehen, dass der zweite Behälter einen zweiten Auslass auf sowie ein zweites Auslassventil zum Absperren bzw. Öffnen des zweiten Auslasses aufweist, wobei der zweite Auslass zum Ablassen von Treibmittel aus dem zweiten Behälter konfiguriert ist, z.B. um den Druck im zweiten Behälter abzusenken.

Gemäß einer Ausführungsförm der Erfindung ist vorgesehen, dass der erste Behälter temperierbar ist, insbesondere in einem Bereich von 0 °C bis 200 °C, vorzugsweise in einem Bereich von 20°C bis 140°C. Gemäß einer weiteren Ausführungsform der Erfindung ist vorgesehen, dass der zweite Behälter temperierbar ist, insbesondere in einem Bereich von 0 °C bis 200 °C, vorzugsweise in einem Bereich von 20°C bis 140°C.

Gemäß einer Ausführungsform der erfindungsgemäßen Einrichtung nach Anspruch 2 ist vorgesehen, dass der erste Behälter mit dem zweiten Behälter derart verbunden ist, dass der getrocknete Werkstoff vom ersten Behälter in den zweiten Behälter geführt werden kann, vorzugsweise über eine Rohrleitung, die insbesondere ein Ventil zum Absperren oder Öffnen der Rohrleitung und/oder eine Dosiereinheit, wie beispielsweise eine Zellradschleuse, aufweist.

Gemäß einer Ausführungsform der erfindungsgemäßen Einrichtung nach Anspruch 2 ist vorgesehen, dass der erste Behälter zur Beladung des getrockneten Werkstoffes mit dem fluiden Treibmittel bei einem Druck von mindestens 2 bar ausgebildet ist, insbesondere bei einem Druck im Bereich von 2 bar bis 100 bar, vorzugsweise bei einem Druck im Bereich von 20 bar bis 50 bar.

Gemäß einer Ausführungsform der erfindungsgemäßen Einrichtung nach Anspruch 2 ist vorgesehen, dass der erste Behälter in Strömungsverbindung mit der Treibmittelquelle und der Trocknungsgasquelle bringbar ist, wobei insbesondere der erste Behälter einen dritten Einlass mit einem drittes Einlassventil zum Absperren bzw. Öffnen des dritten Einlasses aufweist. Hierbei ist der dritte Einlass zum Einleiten von Treibmittel oder Trocknungsgas in den ersten Behälter konfiguriert und kann daher in Strömungsverbindung mit der Treibmittelquelle oder der Trocknungsgasquelle gebracht werden, so dass insbesondere im ersten Behälter ein vordefinierter Druck einstellbar ist.

Weiterhin weist insbesondere der erste Behälter einen ersten Auslass sowie ein erstes Auslassventil zum Absperren oder Öffnen des ersten Auslasses auf. Der erste Auslass ist zum Ablassen von Treibmittel aus dem ersten Behälter konfiguriert, z.B. um den Druck im ersten Behälter abzusenken.

Weiterhin weist insbesondere der erste Behälter einen zweiten Auslass auf sowie ein zweites Auslassventil zum Absperren bzw. Öffnen des zweiten Auslasses. Der zweite Auslass ist zum Ablassen von Werkstoff (z.B. in Granulatform) aus dem ersten Behälter konfiguriert, wobei der zweite Auslass neben dem zweiten Auslassventil eine Dosiereinheit (z.B. in Form einer Zellradschleuse) aufweisen kann.

Gemäß einer Ausführungsform der erfindungsgemäßen Einrichtung nach Anspruch 2 ist vorgesehen, dass der zweite Behälter zum Trocknen des Werkstoffes mit dem fluiden Treibmittel oder dem Trocknungsgas ausgebildet ist, wobei der zweite Behälter optional mit der Trocknungsgasquelle in Strömungsverbindung bringbar ist. Vorteilhafterweise ist es mit der oben genannten Ausführungsform der erfindungsgemäßen Einrichtung nach Anspruch 2 möglich, sowohl im ersten als auch in zweiten Behälter den Werkstoff parallel zu trocknen und mit dem Treibmittel zu beladen bzw. zu imprägnieren. Weiterhin ist eine Verbindung zwischen dem ersten Behälter und dem zweiten Behälter zum Führen des getrockneten Werkstoffes vom ersten in den zweiten Behälter in dieser Ausführungsform vorteilhafterweise nicht notwendig.

Insbesondere weist der zweite Behälter einen zweiten Einlass auf sowie ein zweites Einlassventil zum Absperren bzw. Öffnen des zweiten Einlasses. Der zweite Einlass ist zum Einleiten von Werkstoff (z.B. in Granulatform) in den zweiten Behälter konfiguriert.

Gemäß einer Ausführungsform der erfindungsgemäßen Einrichtung nach Anspruch 2 ist vorgesehen, dass der zweite Behälter mit dem Trockner zum Abtrennen von Wasser aus dem fluiden Treibmittel oder aus dem Trocknungsgas in Strömungsverbindung bringbar ist.

Gemäß einer weiteren Ausführungsform der erfindungsgemäßen Einrichtung nach Anspruch 2 ist vorgesehen, dass der zweite Behälter einen dritten Einlass auf sowie ein drittes Einlassventil zum Absperren bzw. Öffnen des dritten Einlasses aufweist. Hierbei ist der dritte Einlass zum Einleiten von Trocknungsgas in den zweiten Behälter konfiguriert und kann daher in Strömungsverbindung mit der Trocknungsgasquelle gebracht werden, so dass insbesondere im zweiten Behälter ein vordefinierter Druck einstellbar ist.

Gemäß einer Ausführungsform der erfindungsgemäßen Einrichtung nach Anspruch 1 oder 2 ist vorgesehen, dass der Trockner zum Abtrennen von Wasser aus dem fluiden Treibmittel oder aus dem Trocknungsgas in Strömungsverbindung mit der Treibmittelquelle oder der Trocknungsgasquelle bringbar ist. Vorteilhafterweise kann dadurch das fluide Treibmittel oder das Trocknungsgas in die jeweilige Quelle recycelt werden, wodurch der Verbrauch an Treibmittel und/oder Trocknungsgas signifikant reduziert werden kann.

Gemäß einer Ausführungsform der erfindungsgemäßen Einrichtung nach Anspruch 1 oder 2 ist vorgesehen, dass der ersten Behälter mit dem zweiten Behälter in Strömungsverbindung bringbar ist, vorzugsweise über eine Rohrleitung, die insbesondere ein Ventil zum Absperren oder Öffnen der Rohrleitung aufweist. Die Rohrleitung ist hierbei insbesondere dazu konfiguriert, das fluide Treibmittel vom ersten Behälter zum zweiten Behälter oder umgekehrt zu führen. Vorteilhafterweise kann so fluides Treibmittel, welches bereits zur Imprägnierung des Werkstoffes in einem der beiden Behälter verwendet wurde, zur Imprägnierung des Werkstoffes im anderen Behälter verwendet werden. Somit kann auch hierdurch der Verbrauch an fluidem Treibmittel gesenkt werden.

Gemäß einer Ausführungsform der erfindungsgemäßen Einrichtung nach Anspruch 1 oder 2 ist vorgesehen, dass die Treibmittelquelle eine Kohlendioxidquelle ist.

Gemäß einer Ausführungsform der erfindungsgemäßen Einrichtung nach Anspruch 1 oder 2 ist vorgesehen, dass die Trocknungsgasquelle eine Druckluftquelle ist.

Gemäß einer Ausführungsform der erfindungsgemäßen Einrichtung nach Anspruch 1 oder 2 ist vorgesehen, dass der Trockner zum Abtrennen von Wasser aus dem fluiden Treibmittel oder aus dem Trocknungsgas als Druckgastrockner bzw. Drucklufttrockner ausgebildet ist, der mit dem Trocknungsgas, insbesondere Luft, oder dem fluiden Treibmittel, insbesondere Kohlendioxid, betrieben werden kann, wobei das Trocknungsgas oder das fluide Treibmittel in dem Trockner derartig komprimiert und/oder abgekühlt wird, dass das Wasser im Trocknungsgas oder dem fluiden Treibmittel als Kondenswasser ausfallen und abgetrennt werden kann.

Weitere Einzelheiten und Vorteile der Erfindung sollen durch die nachfolgende Figurenbeschreibung von Ausführungsbeispielen anhand der Figur erläutert werden.

Es zeigen:
- Fig. 1: eine schematische Darstellung einer Ausführungsform der erfindungsgemäßen Einrichtung;
- Fig. 2: eine schematische Darstellung einer alternativen Ausführungsform der erfindungsgemäßen Einrichtung;
- Fig. 3: eine schematische Darstellung einer weiteren alternativen Ausführungsform der erfindungsgemäßen Einrichtung;
- Fig. 4: eine schematische Darstellung einer weiteren alternativen Ausführungsform der erfindungsgemäßen Einrichtung;
- Fig. 5: eine schematische Darstellung einer weiteren alternativen Ausführungsform der erfindungsgemäßen Einrichtung; und
- Fig. 6: eine schematische Darstellung einer weiteren alternativen Ausführungsform der erfindungsgemäßen Einrichtung.

Erfindungsgemäß ist die Bereitstellung einer Einrichtung vorgesehen, in der insbesondere polymeres Granulat sowohl getrocknet als auch mit einem Treibmittel imprägniert werden kann.

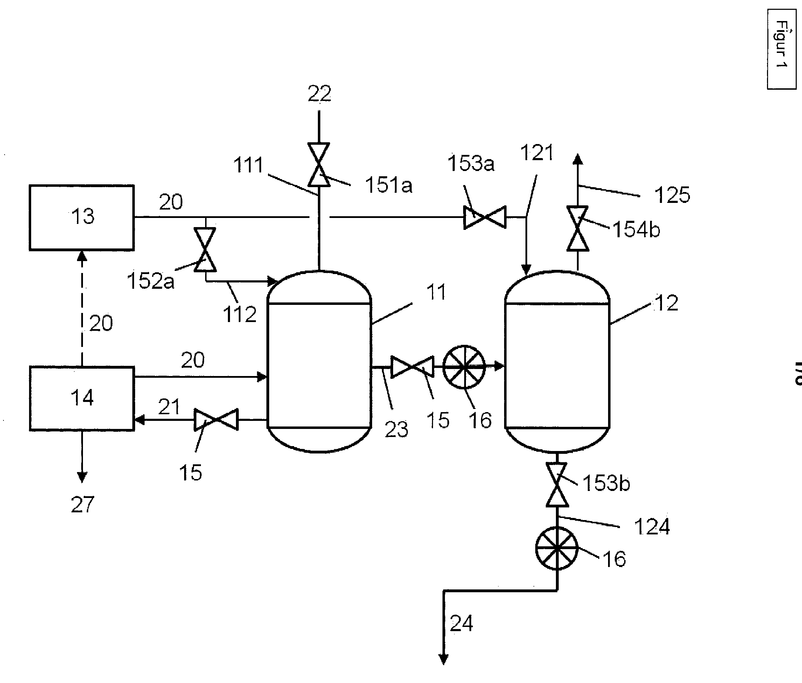

Figur 1 illustriert eine bevorzugte Ausführungsform der erfindungsgemäßen Einrichtung. Danach weist die Einrichtung einen ersten Behälter 11 auf, der zur Trocknung des zu imprägnierenden Kunststoffgranulats 22 ausgebildet ist. Der erste Behälter 11 weist zumindest einen ersten Einlass 111 zum Beladen des Behälters mit dem zu trocknenden Kunststoffgranulat 22 auf, der vorzugsweise mit einem ersten Einlassventil 151 a zum Absperren oder Öffnen des ersten Einlasses 111 ausgestattet ist.

Zur Trocknung des Kunststoffgranulat 22 ist der erste Behälter 11 derartig mit einer Kohlendioxidquelle 13 verbunden, dass Kohlendioxid 20 aus der Kohlendioxidquelle 13 in den ersten Behälter 11 einleitbar ist, vorzugsweise über einen zweiten Einlass 112, der bevorzugt mit einem zweiten Einlassventil 152a zum Absperren oder Öffnen des zweiten Einlasses 112 ausgestattet ist.

Das Kohlendioxid 20 umspülte das Kunststoffgranulat 22 im ersten Behälter 11 und nimmt dabei im Wesentlichen vollständig das am oder im Kunststoffgranulat 22 gebundene Wasser 27 auf. Nach dem Durchspülen des im ersten Behälter 11 befindlichen Kunststoffgranulat 22 ist es erforderlich, das sich nun im Kohlendioxid 21 befindlichen Wasser 27 vom vorgenannten 21 abzutrennen. Daher ist der erste Behälter 11 derartig mit einer Gastrocknungsanlage bzw. Gastrockner 14 verbunden, dass das angefeuchtete Kohlendioxid 21 in den Gastrockner 14 geführt werden kann, vorzugsweise über eine Rohrleitung, die mit einem Ventil 15 zum Absperren oder Öffnen der Rohrleitung ausgestattet sein kann. Im Gastrockner 14 kann das aus den Kunststoffgranulat 22 abgezogenen Wasser 27 vom Kohlendioxid 20 abgetrennt, und das nun wieder trockene Kohlendioxid 20 wieder in der ersten Behälter 11 geleitet werden, um beispielsweise noch eventuell verbliebene Feuchtigkeit aus dem Kunststoffgranulat abziehen zu können, wiederum vorzugsweise über eine entsprechende Rohrleitung.

Alternativ oder zusätzlich kann der Gastrockner 14 mit der Kohlendioxidquelle 13 derartig verbunden sein, dass das getrocknete Kohlendioxid 20 zurück in die Kohlendioxidquelle 13 geführt werden kann. Vorteilhafterweise kann durch die Trocknung des feuchten Kohlendioxids 21 der Kohlendioxidverbrauch der erfindungsgemäßen Einrichtung signifikant verringert werden.

Weiterhin kann der erste Behälter 11 einen Auslass 115 aufweisen, vorzugweise mit einem Auslassventil 152b ausgestattet, über welchen Kohlendioxid 20,21 aus der Einrichtung abgeführt werden kann.

Zum Imprägnieren des nun getrockneten Kunststoffgranulats 23 ist weiterhin vorgesehen, dass die erfindungsgemäße Vorrichtung einen zweiten Behälter 12 aufweist, der zum Imprägnieren des getrockneten Kunststoffgranulats 23 ausgebildet ist, insbesondere bei einem Druck im Bereich von 2 bar bis 100 bar, bevorzugt bei einem Druck im Bereich von 20 bar bis 50 bar. Der zweite Behälter 12 ist dabei derartig mit der Kohlendioxidquelle 13 verbunden, dass das Kohlendioxid 20 in den zweiten Behälter 12 eingeleitet werden kann, vorzugsweise über einen ersten Einlass 121, der mit einem ersten Einlassventil 153a zum Absperren oder Öffnen des ersten Einlasses 121 ausgestattet ist.

Zur Bestückung des zweiten Behälters 12 mit getrocknetem Kunststoffgranulat 23 ist dieser 12 derartig mit dem ersten Behälter 11 verbunden, dass das getrocknete Kunststoffgranulat 23 vom ersten Behälter 11 in den zweiten Behälter überführt werden kann, vorzugsweise über eine Rohrleitung, die neben einem Ventil 15 zum Absperren und Öffnen der Rohrleitung auch eine Dosiereinheit wie eine Zellradschleuse 16 aufweisen kann.

Zu Ablassen des getrockneten und imprägnierten Kunststoffgranulats 24 weist der zweite Behälter 12 zumindest einen ersten Auslass 124 sowie ein erstes Auslassventil 153b auf, dass zum Absperren oder Öffnen des ersten Auslasses 124 dient. Der erste Auslass 124 kann weiterhin mit einer Dosiereinheit, beispielsweise in Form einer Zellradschleuse 16, ausgestattet sein.

Zudem kann auch der zweite Behälter 12 mit einem zweiten Auslass 125 ausgestattet sein, über welchen Kohlendioxid 20 aus dem zweiten Behälter 12 abgeführt bzw. abgelassen kann werden kann. Der zweite Auslass 125 weist vorzugsweise ein zweites Auslassventil 154b auf. Insbesondere kann der zweite Auslass 125 dazu verwendet werden, den Kohlendioxiddruck im zweiten Behälter 12 zu steuern.

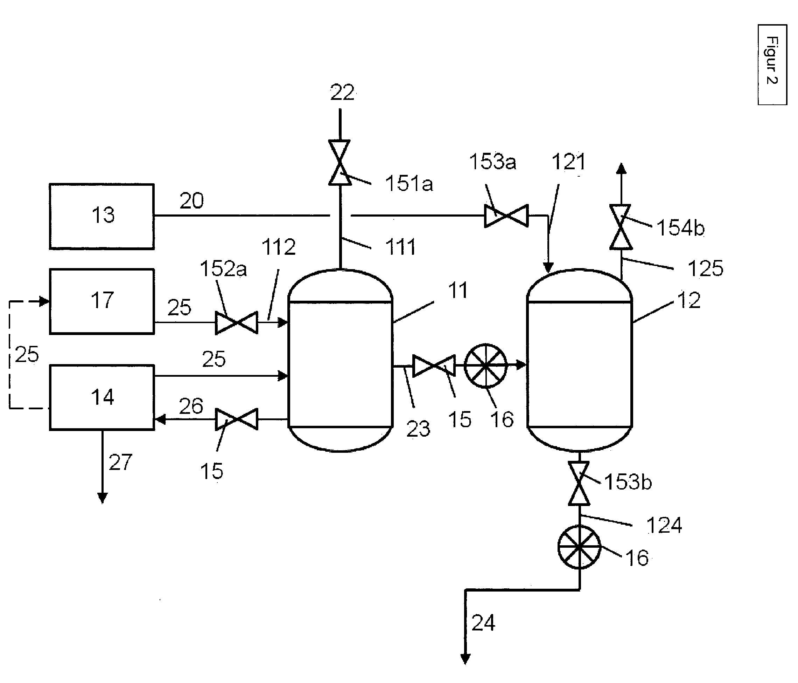

Wie in Fig. 2 gezeigt kann der erste Behälter 11 alternativ statt mit der Treibmittelquelle 13 mit einer Druckluftquelle 17 so in Verbindung stehen, so dass trockene Druckluft 25 in den ersten Behälter 11 einleitbar ist, wobei die Druckluft 25 zum Trocknen des Kunststoffgranulats 22 vorgesehen ist. Ähnlich zur Verwendung von Kohlendioxid 20 als Trocknungsmittel, kann auch die angefeuchtete Druckluft 26 nach dem Durchströmen des ersten Behälters 11 zum Gastrockner 14 geführt werden, in welchem Wasser 27 von der Druckluft 25 entfernt werden kann, und die nun wieder trockene Druckluft 25 ggf. wieder in den ersten Behälter 11 zurückgeführt werden. Dazu ist der erste Behälter 11 so mit der Druckluftquelle 17 verbunden, dass Druckluft 25 über den zweiten Einlass 112 in den ersten Behälter 11 geführt werden kann. Dabei kann der Gastrockner 14 auch so mit der Druckquelle 17 verbunden sein, dass die getrocknete Druckluft 25 in die Druckluftquelle 17 zurückgeführt werden kann.

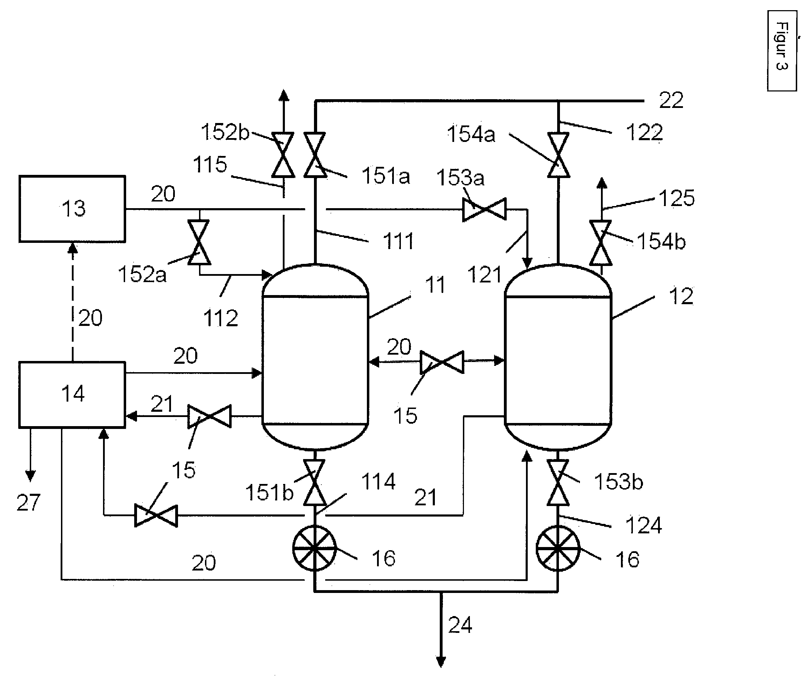

Fig. 3 zeigt eine weitere alternative Ausführungsform der erfindungsgemäßen Einrichtung. Hierbei ist vorgesehen, dass sowohl der erste Behälter 11 als auch der zweite Behälter 12 zum Trocknen des Kunststoffgranulats 22 und zum Imprägnieren des getrockneten Kunststoffgranulats 23 bei einem Druck im Bereich von 2 bar bis 100 bar, vorzugweise bei einem Druck im Bereich von 20 bar bis 50 bar, ausgebildet sind. Dafür weisen der erste Behälter 11 und der zweite Behälter jeweils einen Einlass 111, 122 zur Einbringung des Kunststoffgranulats 22 in den jeweiligen Behälter 11,12 mit einem Ventil 151 a, 154a zum Absperren oder Öffnen des ersten Einlasses 111, 122 auf, sowie einen Auslass 114, 124 zum Ablassen des getrockneten und mit Kohlendioxid 20 imprägnierten Kunststoffgranulats 24, wobei auch der jeweilige Auslass 114, 124 ein Auslassventil 151b, 153b und eine Dosiereinheit wie eine Zellradschleuse 16 aufweisen kann.

Zusätzlich sind dabei sowohl der erste Behälter 11 als auch der zweite Behälter 12 mit einer Kohlendioxidquelle 13 verbunden, um Kohlendioxid 20 als Trocknungsmittel und als Imprägnierungsmittel in den ersten Behälter 11 und den zweiten Behälter 12 einleiten zu können, vorzugsweise über einen jeweiligen Einlass 112, 121, der jeweils mit einem Einlassventil 152a, 153a zum Absperren oder Öffnen des Einlasses 112, 121 dient.

Darüber hinaus weisen der ersten Behälter 11 und der zweite Behälter jeweils einen weiteren Auslass 115, 125 auf, der dazu ausgebildet ist, Kohlendioxid 20 aus dem jeweiligen Behälter 11,12 abzulassen, und somit den Druck in den Behältern 11, 12 steuern zu können. Auch diese Auslasse 115, 125 sind jeweils vorzugsweise mit einem Auslassventil 152b, 154b ausgestattet.

Weiterhin sind der erste Behälter 11 und der zweite Behälter 12 in gleicher Weise mit einem Gastrockner 14 verbunden wie der erste Behälter 11 in den in Fig. 1 oder 2 gezeigten Ausführungsformen, d. h. so dass angefeuchtetes Kohlendioxid 21 aus dem ersten 11 oder zweiten Behälter 12 in den Gastrockner 14 geführt werden kann, und darin getrocknetes Kohlendioxid 20 wieder zurück in den ersten 11 oder zweiten Behälter 12.

Daneben ist vorgesehen, dass der erste Behälter 11 und der zweite Behälter 12 so miteinander verbunden sind, dass Kohlendioxid 20 von ersten Behälter 11 zum zweiten Behälter 12 oder umgekehrt geführt werden kann. Vorteilhafterweise kann so Kohlendioxid 20, das zum Imprägnieren des getrockneten Kunststoffgranulats 23 im ersten Behälter 11 verwendet wurde, in den zweiten Behälter 12 geführt werden, um dort ebenfalls zur Imprägnierung verwendet werden zu können. Somit kann der Kohlendioxidverbrauch der erfindungsgemäßen Einrichtung signifikant verringert werden.

Vorteilhafterweise ist es mit dieser Ausführungsform weiterhin möglich, Kunststoffgranulat 22 parallel in beiden Behältern zu trocknen und zu imprägnieren. Beispielsweise wäre vorstellbar, dass im ersten Behälter 11 das Kunststoffgranulat 22 getrocknet wird, wohingegen im zweiten Behälter 12 bereits getrocknetes Kunststoffgranulat 23 imprägniert wird. Nach Abschluss der Trocknung im ersten Behälter 11 und Imprägnierung im zweiten Behälter 12 kann das Kohlendioxid 20 aus dem zweiten Behälter 12 in den ersten Behälter 11 geführt werden und dort zum Imprägnieren verwendet werden, wohingegen frisches Kohlendioxid 20 aus der Kohlendioxidquelle 13 oder "recyceltes" Kohlendioxid 20 aus der Gastrocknungseinrichtung 14 in den zweiten Behälter 12 zum Trocken geführt wird.

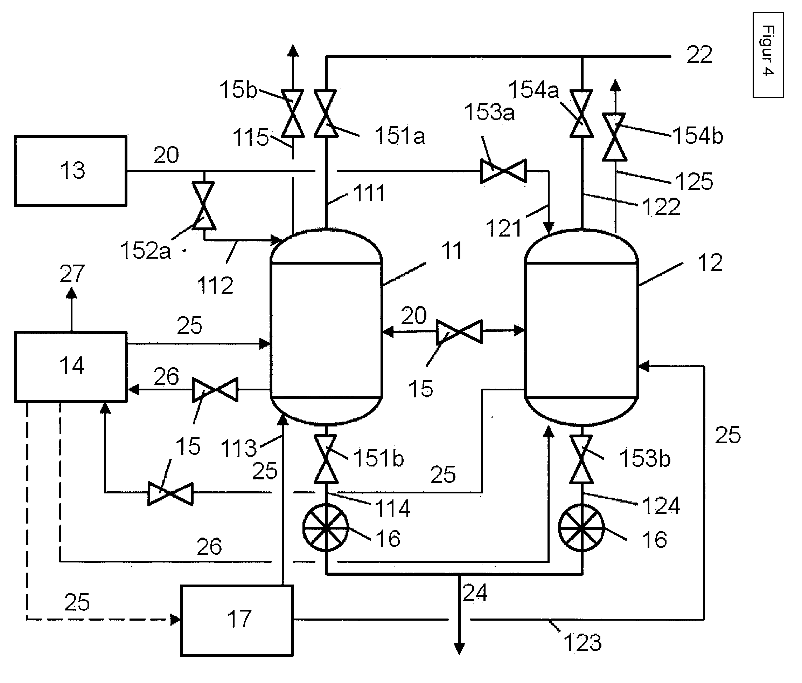

Auch hier ist es möglich, wie in Fig. 4 gezeigt, dass der ersten Behälter 11 und der zweite Behälter 12 zusätzlich mit einer Druckluftquelle 17 so verbunden sind, dass Druckluft 25 in den ersten Behälter 11 und den zweiten Behälter 12 geführt werden kann. Dafür weisen der ersten Behälter 11 und der zweite Behälter 12 jeweils einen dritten Einlass 113, 123 mit einem dritten Einlassventil auf, über welchen Druckluft 25 in den ersten Behälter 11 und den zweiten Behälter geführt werden kann. Weiterhin sind der erste Behälter 11 und der zweite Behälter 12 so mit einem Gastrockner 14 verbunden, dass die durch das Trocknen des Kunststoffgranulats 22 angefeuchtete Druckluft 26 in den Gastrockner 14, und die im Gastrockner 14 getrocknete Druckluft 25 wieder in den ersten Behälter 11 und den zweiten Behälter 12 zurückgeführt werden kann. Auch hier kann der Gastrockner 14 derartig mit der Druckluftquelle 17 verbunden sein, dass die im Trockner 14 getrocknete Druckluft 25 auch in die Druckluftquelle 17 zurückgeführt werden kann.

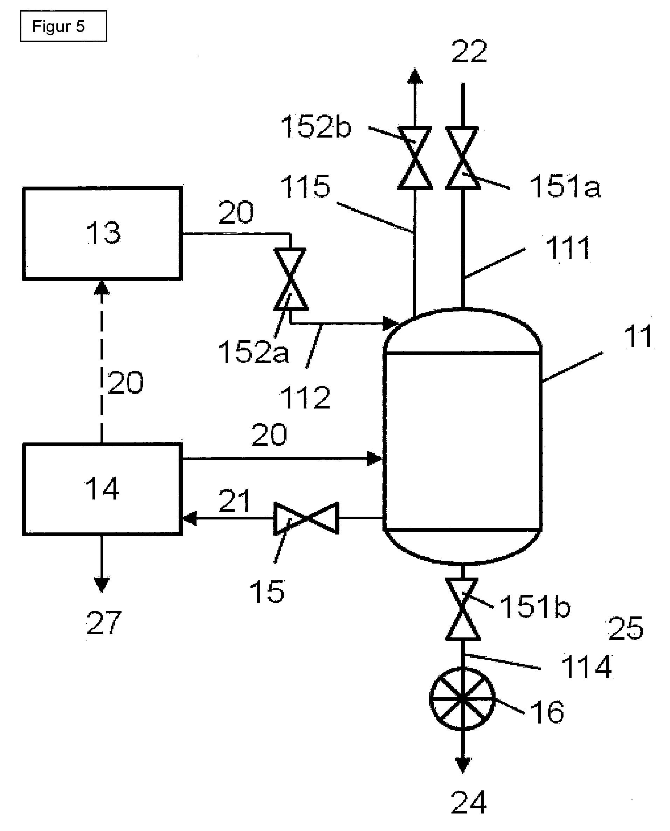

Eine weitere alternative Ausführungsform der erfindungsgemäßen Einrichtung ist in Fig. 5 dargestellt. Hierbei weist die Einrichtung nur einen ersten Behälter 11 auf, der sowohl zum Trocknen von Kunststoffgranulat 22 als auch zum Imprägnieren des getrockneten Kunststoffgranulats 23 bei einem Druck im Bereich von 2 bar bis 100 bar, vorzugsweise bei einem Druck von 20 bar bis 50 bar, ausgebildet ist. Der erste Behälter 11 ist dabei so mit einer Kohlendioxidquelle 13 verbunden, dass Kohlendioxid in den ersten Behälter 11 einleitbar ist, insbesondere über einen Einlass 112 mit einem Einlassventil 152a zum Absperren oder Öffnen des Einlasses 112.

Weiterhin weist der erste Behälter einen weiteren Einlass 111 mit einem weiteren Einlassventil 151 a zum Absperren oder Öffnen des weiteren Einlasses 111 auf, über welchen der erste Behälter 11 mit Kunststoffgranulat 22 befüllbar ist, sowie einen ersten Auslass 114, vorzugsweise mit einem ersten Auslassventil 151b und einer Dosiereinrichtung wie eine Zellradschleuse 16, wobei der der erste Auslass 114 zum Ablassen des imprägnierten Werkstoffes 24 ausgebildet ist.

Zudem ist der erste Behälter 11 mit einen Gastrockner 14 so verbunden, dass angefeuchtetes Kohlendioxid 21 aus dem ersten Behälter 11 in den Gastrockner 14 geführt, und getrocknetes Kohlendioxid 20 zurück in den ersten Behälter 11 geführt werden kann.

Auch hier kann der Gastrockner 14 derart mit der Kohlendioxidquelle 13 verbunden sein, dass das getrocknete Kohlendioxid 20 in die Kohlendioxidquelle 13 zurückgeführt werden kann.

Daneben weist der erste Behälter einen zweiten Auslass 115 auf, über welchen Kohlendioxid 20 aus dem ersten Behälter 11 abgeführt bzw. abgelassen kann werden kann. Der zweite Auslass 115 weist vorzugsweise ein zweites Auslassventil 152b auf. Insbesondere kann der zweite Auslass 115 dazu verwendet werden, den Kohlendioxiddruck im ersten Behälter 11 zu steuern

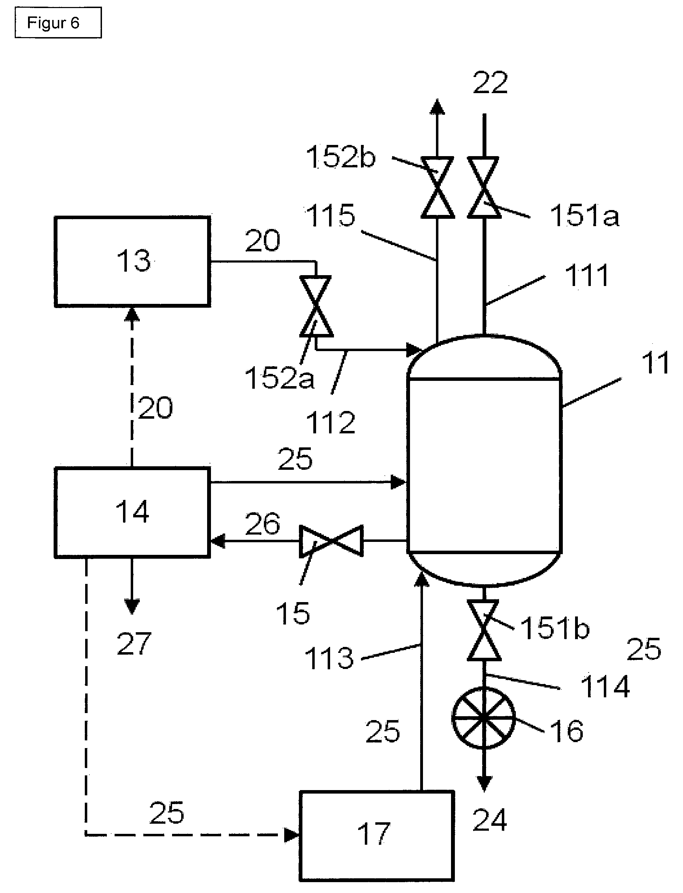

Der erste Behälter 11 kann aber auch, wie in Fig. 6 gezeigt, mit einer Druckluftquelle 17 so verbunden sein, dass Druckluft 25 zum Trocken des Kunststoffgranulats 22 in der ersten Behälter 11 geführt werden kann, insbesondere über einen dritten Einlass 113, der vorzugsweise mit einem dritten Einlassventil ausgestattet sein kann. Hierbei ist der erste Behälter 11 mit einen Gastrockner 14 so verbunden, dass die durch das Trocknen des Kunststoffgranulats 22 angefeuchtete Druckluft 26 aus dem ersten Behälter 11 in den Gastrockner 14 geführt, und die im Gastrockner 14 getrocknete Druckluft 25 zurück in den ersten Behälter 11 geführt werden kann. Auch hier kann der Gastrockner 14 derart mit der Druckluftquelle 17 verbunden sein, dass die getrocknete Druckluft 25 auch in die Druckluftquelle 17 zurückgeführt werden kann.

**Bezugszeichenliste**

| | |
|---|---|
| 11 | Erster Behälter |
| 111 | Erster Einlass vom ersten Behälter (Werkstoff) |
| 112 | Zweiter Einlass vom ersten Behälter (Treibmittel oder Druckluft) |
| 113 | Dritter Einlass vom ersten Behälter (Treibmittel oder Druckluft) |
| 114 | Erster Auslass vom ersten Behälter (imprägnierter Werkstoff) |
| 115 | Zweiter Auslass vom ersten Behälter (Treibmittel) |
| 12 | Zweiter Behälter |
| 121 | Erster Einlass vom zweiten Behälter (Treibmittel) |
| 122 | Zweiter Einlass vom zweiten Behälter (Werkstoff) |
| 123 | Dritter Einlass vom zweiten Behälter (Druckluft) |
| 124 | Erster Auslass vom zweiten Behälter (imprägnierter Werkstoff) |
| 125 | Zweiter Auslass vom zweiten Behälter (Treibmittel) |
| 13 | Kohlendioxidquelle |
| 14 | Gastrockner |
| 15 | Ventil |
| 15a | Einlassventil |
| 151a | Erstes Einlassventil des ersten Behälters (Werkstoff) |
| 152a | Zweites Einlassventil des ersten Behälters (Treibmittel oder Druckluft) |
| 153a | Erstes Einlassventil des zweiten Behälters (Treibmittel) |
| 154a | Zweites Einlassventil des zweiten Behälters (Werkstoff) |
| 15b | Auslassventil |
| 151b | Erstes Auslassventil des ersten Behälters (Werkstoff) |
| 152b | Zweites Auslassventil des ersten Behälters (Treibmittel oder Druckluft) |
| 153b | Erstes Auslassventil des zweiten Behälters (Werkstoff) |
| 154b | Zweites Auslassventil des zweiten Behälters (Treibmittel) |
| 16 | Zellradschleuse |
| 17 | Druckluftquelle |
| | |
| 20 | Kohlendioxid (trocken) |
| 21 | Kohlendioxid (angefeuchtet) |
| 22 | Kunststoffgranulat mit Restfeuchte |
| 23 | Kunststoffgranulat (trocken) |
| 24 | Kunststoffgranulat (trocken und imprägniert mit Kohlendioxid) |
| 25 | Druckluft (trocken) |
| 26 | Druckluft (angefeuchtet) |
| 27 | Feuchtigkeit |

## Patentansprüche

1. Einrichtung zum Trocken und Imprägnieren eines Werkstoffes mit einem fluiden Treibmittel, aufweisend
- eine Treibmittelquelle (13) zum Bereitstellen eines fluiden Treibmittels (20),
- einen ersten Behälter (11), der zum Trocknen eines Werkstoffes (22) mit dem fluiden Treibmittel (20) oder einem Trocknungsgas (25) und zur Beladung des getrockneten Werkstoffes (23) mit dem fluiden Treibmittel (20) bei einem Druck von mindestens 2 bar ausgebildet ist, wobei der erste Behälter (11) in Strömungsverbindung mit der Treibmittelquelle (13) oder mit der Treibmittelquelle (13) und einer Trocknungsgasquelle (17) zur Bereitstellung des Trocknungsgases (25) bringbar ist, und
- einen Trockner (14) zum Abtrennen von Wasser (27) aus dem fluiden Treibmittel (21) oder dem Trocknungsgas (26), wobei der Trockner (14) in Strömungsverbindung mit dem ersten Behälter (11) bringbar ist.

2. Einrichtung zum Trocken und Imprägnieren eines Werkstoffes mit einem fluiden Treibmittel, aufweisend
- eine Treibmittelquelle (13) zum Bereitstellen eines fluiden Treibmittels,
- einen ersten Behälter (11), der zum Trocknen eines Werkstoffes (22) mit dem fluiden Treibmittel (20) oder einem Trocknungsgas (25) ausgebildet ist, wobei der erste Behälter (11) in Strömungsverbindung mit der Treibmittelquelle (13) oder einer Trocknungsgasquelle (17) zur Bereitstellung des Trocknungsgases (25) bringbar ist,
- einen zweiten Behälter (17), der zur Beladung des getrockneten Werkstoffes (23) mit dem fluiden Treibmittel (20) bei einem Druck von mindestens 2 bar ausgebildet ist, wobei der zweite Behälter (12) mit der Treibmittelquelle (13) in Strömungsverbindung bringbar ist, und
- einen Trockner zum Abtrennen von Wasser (27) aus dem fluiden Treibmittel (21) oder dem Trocknungsgas (26), wobei der Trockner (17) in Strömungsverbindung mit dem ersten Behälter (11) bringbar ist.

3. Einrichtung nach Anspruch 1 oder 2, **dadurch gekennzeichnet, dass** der erste Behälter (11) und/oder der zweite Behälter (12) temperierbar ist.

4. Einrichtung nach einen Anspruch 2 oder 3, **dadurch gekennzeichnet, dass** der erste Behälter (11) mit dem zweiten Behälter (12) derart verbunden ist, dass der getrocknete Werkstoff (23) vom ersten Behälter (11) in den zweiten Behälter (12) geführt werden kann.

5. Einrichtung nach einem der Ansprüche 2 bis 4, **dadurch gekennzeichnet, dass** der erste Behälter (11) zur Beladung des getrockneten Werkstoffes (23) mit einem fluiden Treibmittel (20) bei einem Druck von mindestens 2 bar ausgebildet ist.

6. Einreichung nach Anspruch 5, **dadurch gekennzeichnet, dass** der erste Behälter (11) in Strömungsverbindung mit der Treibmittelquelle (13) und der Trocknungsgasquelle (17) bringbar ist.

7. Einrichtung nach einem der Ansprüche 2 bis 6, **dadurch gekennzeichnet, dass** der zweite Behälter (12) zum Trocknen des Werkstoffes mit dem fluiden Treibmittel (20) oder dem Trocknungsgas (25) ausgebildet ist, wobei der zweite Behälter (12) optional mit der Trocknungsgasquelle (17) in Strömungsverbindung bringbar ist.

8. Einrichtung nach einem der Ansprüche 2 bis 7, **dadurch gekennzeichnet, dass** der zweite Behälter (12) mit dem Trockner (14) zum Abtrennen von Wasser (27) aus dem fluiden Treibmittel (21) oder aus dem Trocknungsgas (26) in Strömungsverbindung bringbar ist.

9. Einrichtung nach einem der vorherigen Ansprüche, **dadurch gekennzeichnet, dass** der Trockner (14) zum Abtrennen von Wasser (27) aus dem fluiden Treibmittel (21) oder aus dem Trocknungsgas (26) in Strömungsverbindung mit der Treibmittelquelle (13) oder der Trocknungsgasquelle (17) bringbar ist.

10. Einrichtung nach einem der Ansprüche 2 bis 9, **dadurch gekennzeichnet, dass** der ersten Behälter (11) mit dem zweiten Behälter (12) in Strömungsverbindung bringbar ist.

11. Einrichtung nach einem der vorherigen Ansprüche, **dadurch gekennzeichnet, dass** die Treibmittelquelle (13) eine Kohlendioxidquelle ist.

12. Einrichtung nach einem der vorherigen Ansprüche, **dadurch gekennzeichnet, dass** die Trocknungsgasquelle (17) eine Druckluftquelle ist.

13. Einrichtung nach einem der vorherigen Ansprüche, **dadurch gekennzeichnet, dass** der Trockner (14) zum Abtrennen von Wasser (27) aus dem fluiden Treibmittel (21) oder aus dem Trocknungsgas (26) als Druckgastrockner ausgebildet ist.
